# EUROPEAN PATENT APPLICATION

(11) **EP 2 756 760 A1**
(43) Date of publication of application: **23.07.2014**
(21) Application number: 13161367.1
(22) Date of filing: 27.03.2013
(51) Int. Cl.: A23F 5/08, A23F 5/14

(54) **Coffee powder with coating layer**

(30) Priority: 16.01.2013 TW 102200940
(71) Applicant: Full Fill Indutrial Co., Ltd., Taipei City 114 (TW)
(72) Inventor: Liu, Tzeng-Shyang, New Taipei City 231 (TW)
(74) Representative: Chaillot, Geneviève

(57) **Abstract**

A coffee powder includes a plurality of particles which are obtained by grinding coffee beans from a coffee grinder and each particle of the coffee powder is coated by a coating layer. The coating layer is made by food-grad powder which is ground at low speed by a U-shaped grinder. The coating layer keeps air from the particles of the coffee powder so as to keep the freshness of the coffee powder.

## Description

### BACKGROUND OF THE INVENTION

### (1) FIELD OF THE INVENTION

The present invention relates to coffee powder and each particle of the coffee powder is coated with a coating layer to keep the freshness of the coffee powder.

### (2) DESCRIPTION OF THE PRIOR ART

The conventional ways to enjoy coffee are roughly divided into two ways, the first way is the use of instant coffee which is prepared by hot water. This way is convenient but may not be able to get the real taste of the coffee because the flavor of the coffee becomes weaker along with the time. The second way is to grind the coffee beans by a coffee grinder.

Either of the first or second ways has to grind the coffee beans into coffee powders, however, the flavor of the coffee looses away quickly if the coffee powders are in contact with air. In order to ensure that the freshness of the coffee powder is maintained, the air has to be kept away from the coffee powder. The conventional ways to isolate the coffee powder from air are to use Helium, a one-way valve and a vacuum bag. The one-way valve is installed to the bag of the coffee powder and only the carbon dioxide in the bag can be related to the outside via the one-way valve and the outside air cannot enter into the bag. The vacuum bag is to suck air in the bag out so that no air is in contact with the coffee powder. Therefore, carbon dioxide is not quickly generated from the coffee powder to keep the coffee powder fresh. The use of Helium is to restrain the coffee powder from generating carbon dioxide. All of the conventional ways require complicated processes and increase the manufacturing cost.

The present invention intends to provide coffee powder wherein each particle of the coffee powder is coated with a coating layer which is made by milk, cream, sugar or the combination of the milk, cream and sugar.

### SUMMARY OF THE INVENTION

The present invention relates to a coffee powder and comprises a plurality of particles which are obtained by grinding coffee beans from a coffee grinder and each particle of the coffee powder is coated by a coating layer. The coating layer is made by food-grad powder which is ground at low speed by a U-shaped grinder. The coating layer keeps air from the particles of the coffee powder so as to keep the freshness of the coffee powder.

The primary object of the present invention is to provide a coffee powder wherein each particle of the coffee powder is coated by a coating layer which is made by food-grade powder so as to isolate air from being in contact with the particle and to keep the freshness of the coffee powder.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the U-shaped grinder for making the coating layer of the present invention;
Fig. 2 shows that the coffee powder and the material of the coating layer are to be blended in the U-shaped grinder of the present invention;
Fig. 3 is a perspective view to show each particle of the coffee powder of the present invention, and
Fig. 4 shows the cross sectional view of each particle of the coffee powder of the present invention.

### DETAILED DESCRIPTION OF THE PREFERRED EMBODIMENT

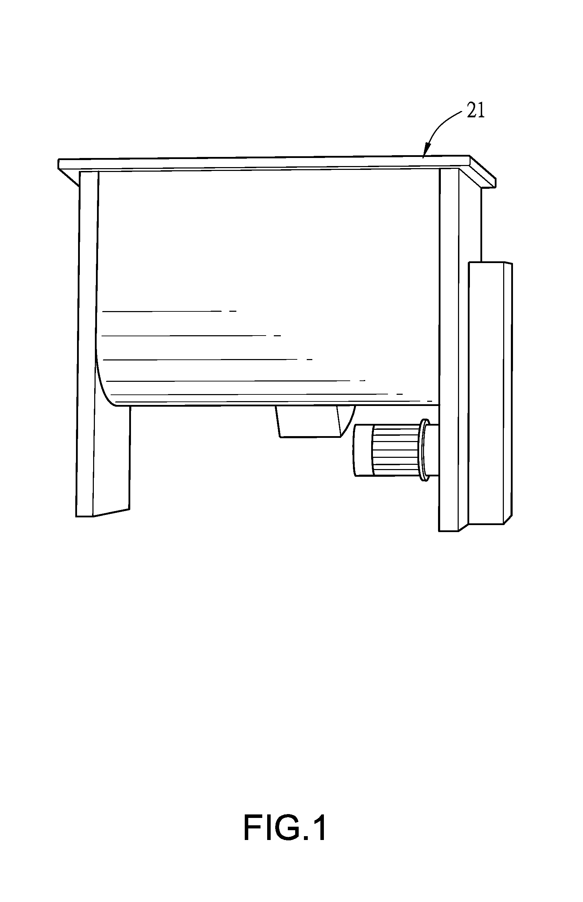

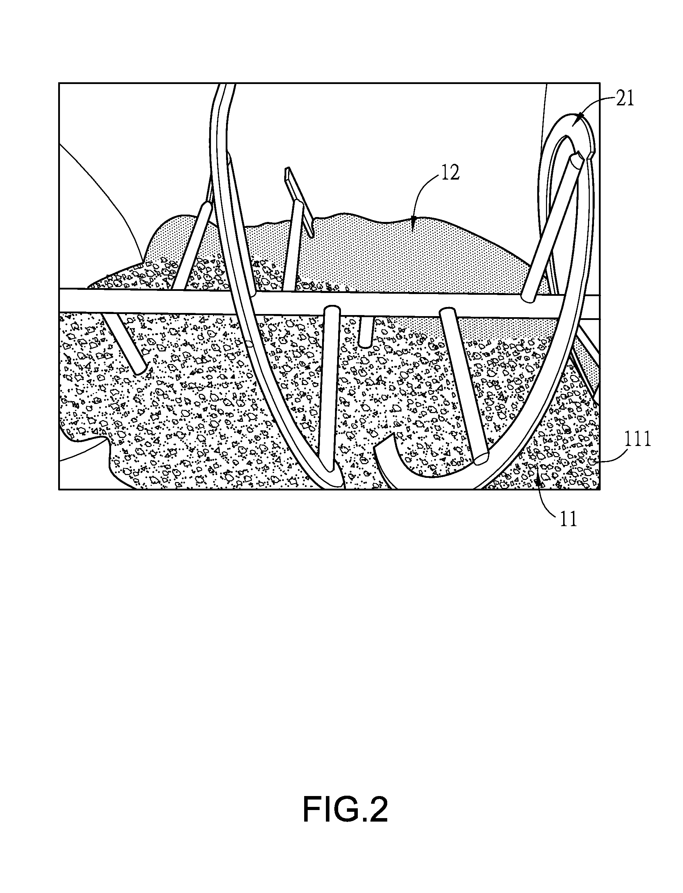

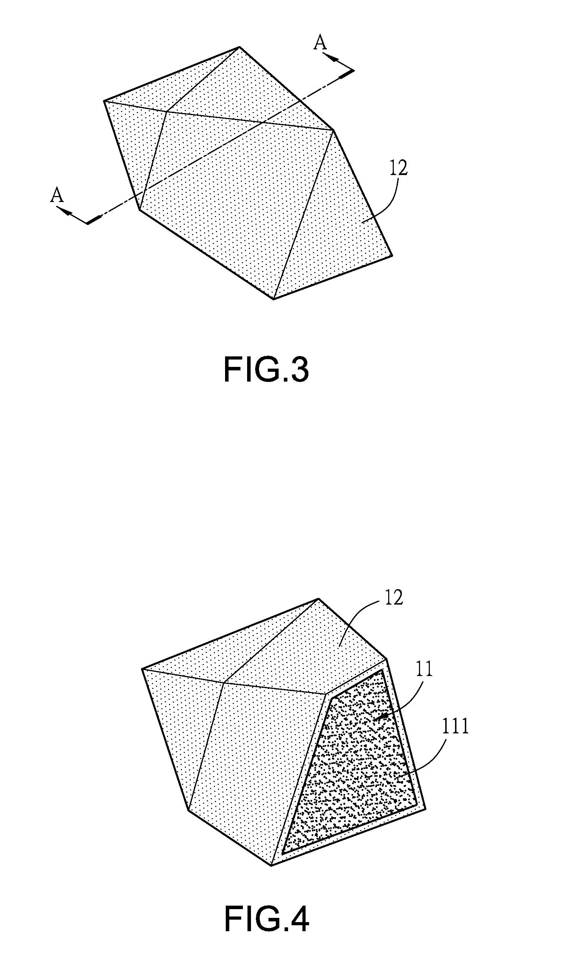

Referring to Figs. 1 to 4, the coffee powder 11 of the present invention comprises a plurality of particles 111 which are obtained by grinding coffee beans from a coffee grinder (not shown).

A coating layer 12 is made by food-grad powder which is ground at low speed by a U-shaped grinder 21. The coating layer 12 is evenly coated to each particle 111.

By the coating layer 12 coated to each particle 111 of the coffee powder 11, the freshness of the coffee powder 11 is maintained and air is kept out from in contact with the particle 111 of the coffee powder 11 so that the flavor does not fade away.

The coating layer 12 is made by cream powder, milk powder, cream powder and milk powder, sugar powder, or sugar powder and cream powder.

The coffee beans are 16-24 mesh beans and the ratio between the coffee powder and the coating layer 12 preferably is 5:4. The grinding time of the U-shaped grinder 21 preferably is 15 to 20 minutes.

The coating layer 12 isolates air from being in contact with the particles of the coffee powder 11 so that the coffee powder 11 keeps its freshness and flavor for a long period of time.

The sugar powder and the cream powder absorb the flavor of the coffee beans so as to provide the coated coffee powder 11 more flavor when compared with the instant coffee powder. The sugar powder and the cream powder also keep air from the coffee powder 11 and, suppress the coffee powder 11 from generating carbon dioxide. By this way, the flavor and freshness of the coffee beans can be preserved.

While we have shown and described the embodiment in accordance with the present invention, it should be clear to those skilled in the art that further embodiments may be made without departing from the scope of the present invention.

## Claims

1. A coffee powder (11) comprising:
a plurality of particles (111) which are obtained by grinding coffee beans from a coffee grinder;
a coating layer (12) made by food-grad powder which is ground at low speed by a U-shaped grinder (21), the coating layer (12) evenly coated to each particle (111).

2. The coffee powder (11) as claimed in claim 1, wherein the coating layer (12) is made by cream powder.

3. The coffee powder (11) as claimed in claim 1, wherein the coating layer (12) is made by milk powder.

4. The coffee powder (11) as claimed in claim 1, wherein the coating layer (12) is made by cream powder and milk powder.

5. The coffee powder (11) as claimed in claim 1, wherein the coating layer (12) is made by sugar powder.

6. The coffee powder (11) as claimed in claim 1, wherein the coating layer (12) is made by sugar powder and cream powder.

7. The coffee powder (11) as claimed in claim 1, wherein the coffee beans are 16-24 mesh beans.

8. The coffee powder (11) as claimed in claim 1, wherein a ratio between the coffee powder (11) and the coating layer (12) is 5:4.
